# DEMANDE DE BREVET EUROPEEN

(11) **EP 2 305 756 A1**
(43) Date de publication de la demande: **06.04.2011**
(21) Numéro de dépôt: 09405165.3
(22) Date de dépôt: 22.09.2009
(51) Int. Cl.: C09C 1/62, A44C 27/00

(54) **Materiau composite colore comprenant des nanoparticules**

(71) Demandeur: ROLEX SA, 1211 Genève 26 (CH)
(72) Inventeur: Pujol, Ollivier, CH-1006 Lausanne (CH); Reigner, Michèle, CH-1110 Morges (CH)
(74) Mandataire: Stona, Daniel

(57) **Abrégé**

L'invention se rapporte à un matériau composite hybride coloré, contenant des nanoparticules métalliques ayant perdu leur tendance naturelle à s'agréger les unes aux autres.

Ce matériau est essentiellement constitué d'une matrice d'un ou plusieurs composés minéraux et d'un ou plusieurs composés organiques dans laquelle sont dispersées des nanoparticules métalliques.

## Description

La présente invention se rapporte à un matériau composite hybride organo-minéral ou organique-inorganique coloré, transparent, translucide ou opaque, qui comprend des nanoparticules. Ce matériau peut se présenter sous la forme d'une couche s'appuyant sur un substrat réfléchissant la lumière, l'effet "couleur" étant alors essentiellement assuré par réflexion de surface, réflexions internes multiples et dispersion.

On sait que des particules métalliques colloïdales dans un verre donnent en transmission une coloration intense et profonde, un exemple célèbre étant la couleur rouge intense des verres de Murano.

La demande de brevet européen n° 08405083.0, non encore publiée, décrit des émaux présentant ces caractéristiques de couleur profonde et intense et leur utilisation dans diverses applications, dont l'horlogerie, la bijouterie et la joaillerie.

La présente invention vise à obtenir des colorations de type Murano, c'est-à-dire intenses et profondes, non sur un verre, ni sur un émail, mais dans un matériau composite organo-minéral. Ce matériau est essentiellement constitué d'une matrice d'un ou plusieurs composés minéraux et d'un ou plusieurs composés organiques dans laquelle sont dispersées des nanoparticules métalliques.

En d'autres termes, l'invention concerne donc un matériau composite hybride organo-minéral, translucide, transparent ou opaque, contenant des nanoparticules métalliques qui le colorent de façon à lui conférer une couleur profonde et intense. Etant dispersées dans la matrice, les nanoparticules ont perdu leur tendance naturelle à floculer, coalescer ou s'agréger les unes aux autres et gardent leur stabilité colloïdale, tout en restant isolées et individuellement séparées.

En effet, une agrégation ou une précipitation des nanoparticules conduit à des couleurs ternes ou brunâtres, voire une perte totale de la teinte considérée, évidemment à l'opposé des couleurs profondes et intenses recherchées.

Selon l'invention, la matrice hybride peut être transparente, translucide ou opaque.

Comme matrice hybride organo-minérale, on peut utiliser par exemple des polymères organiques, modifiés par un élément minéral quelconque, par exemple choisi dans le groupe comprenant le titane, le zirconium, l'aluminium (on parle alors de "ormocers"), ou encore le silicium (on parle alors de "ormosils"), appellations consacrées par l'usage et qui seront utilisées dans la suite de l'exposé. De préférence, l'élément minéral est sous forme d'oxyde, par exemple oxyde de titane, zircone, alumine, silice.

Pour obtenir ces polymères, on va partir des monomères ou des oligomères correspondants qu'on va polymériser, notamment, par voie physique, thermique, chimique ou par irradiation UV.

Comme exemples de constituants de matrices hybrides, on peut citer les polymères obtenus par photo-polymérisation, à l'aide d'initiateurs appropriés, d'oligomères de bisphénol A-glycidyl méthacrylate (BISMA) et/ou de diméthacrylate d'uréthane (UDMA) auxquels on va associer une charge minérale telle que la silice. La charge minérale peut être elle-même un mélange qui comprend d'autres substances, par exemple des substances vitreuses ou des substances céramiques, comprenant si désiré un agent de couplage, tel que le silane.

Des initiateurs de polymérisation appropriés sont par exemple la camphorquinone, la phénylpropanedione ou le lucirine.

De préférence, on met en oeuvre une polymérisation thermique sous pression.

Selon l'invention, les nanoparticules métalliques peuvent être constituées d'un métal noble tel que l'or, l'argent, ou le platine ou encore leurs alliages, et/ou d'un autre métal, par exemple le fer, le chrome, le cuivre, le cobalt, le manganèse ou encore leurs alliages.

L'or donne habituellement une coloration rouge, tandis que le chrome par exemple va apporter une coloration verte, toute chose étant égale par ailleurs. Question couleur, les différents auteurs ne sont d'ailleurs pas d'accord entre eux sur l'influence de la taille des nanoparticules, de leur concentration et de leur forme.

Le matériau composite selon l'invention comprend généralement au plus 20% et de préférence au plus 15% en poids de nanoparticules métalliques par rapport à son poids total.

Normalement, la simple dispersion des nanoparticules au sein de la matrice hybride organo-minérale suffit à empêcher celles-ci de coalescer. Mais on a constaté que parfois cela pouvait s'avérer insuffisant. Il peut arriver en particulier que, selon le mode de préparation et malgré la présence de la matrice hybride, des nanoparticules coalescent néanmoins.

Selon une variante de l'invention, il conviendra de leur ôter toute aptitude à coalescer. Pour ce faire, on pourra utiliser divers moyens, comme cela est notamment décrit dans la demande de brevet européen 08405083.0 non publiée déjà citée.

Un premier moyen pour ôter aux nanoparticules métalliques leur aptitude à s'agréger lors de leur mise en oeuvre, est de les enrober d'une substance inerte vis-à-vis des autres constituants, par exemple de la silice cristalline tel que cela est notamment décrit dans la demande internationale n° WO 2008/014623.

Un deuxième moyen d'éliminer l'aptitude des nanoparticules métalliques à s'agréger ou se rassembler les unes avec les autres est de fonctionnaliser leur surface.

On peut pour ce faire mettre en oeuvre différentes techniques, par exemple par répulsion électrostatique, à l'aide de porteurs de charges placés à la surface des nanoparticules de telle façon à ce qu'elles se repoussent les unes des autres et restent en suspension homogène. La théorie des colloïdes propose diverses solutions dont l'ionisation des groupes fonctionnels déjà présents en surface ou l'adsorption spécifique d'ions. Ainsi, on peut par exemple ajouter de la gomme arabique.

Une autre technique, d'ordre physique, consiste à développer à la surface des nanoparticules, par exemple par greffage ou par liaisons électrostatiques là aussi, des entités, par exemple des molécules ou des ions, dont l'encombrement stérique est tel qu'elles ne pourront plus s'incruster les unes dans les autres, évitant ainsi un phénomène d'agrégation ou de précipitation. Un bon exemple de telles entités est le polystyrène qui va s'adsorber en surface des nanoparticules et faire en sorte qu'elles ne puissent pas s'approcher les unes des autres.

Une autre technique encore est rendre la surface des nanoparticules hydrophile, par exemple par adsorption d'entités, notamment de molécules, de telle sorte que les nanoparticules ainsi rendues hydrophiles vont préférer se lier à l'eau présente et s'écarter ainsi les unes des autres sans pouvoir se réunir. Comme substances hydrophiles, on utilisera avantageusement des substances de type polystyrène modifié par des groupes carboxyles, ou encore des tensioactifs comme le dodécylsulfate de sodium.

L'invention concerne également un matériau en couches comprenant une couche du matériau composite coloré tel qu'il vient d'être décrit, déposée sur une couche de substrat. Ce dernier peut être une surface métallique, céramique, cermet ou une surface réfléchissant la lumière, par exemple un substrat blanc. L'effet "couleur" intense et profond est alors amplifié par la diffusion de la lumière réfléchie sur le fond.

Le matériau en couches peut éventuellement comprendre plusieurs couches de matériau composite, en particulier de couleurs différentes, disposées par exemple les unes à côté des autres sur le substrat.

On aura compris que la mention s'applique à de nombreux domaines relevant de la décoration, notamment sur terre cuite ou objets métalliques, en particulier dans le domaine de la joaillerie et de la bijouterie.

L'invention trouvera également une application avantageuse dans le domaine de l'horlogerie pour la décoration de boîtes, de lunettes ou de cadrans de montres.

### EXEMPLES

### Exemple 1

Cet exemple consiste à mélanger de manière homogène des nano-pigments (A), obtenus selon les enseignements de la demande internationale n° WO2008/014623, avec une matrice hybride organo-minérale translucide (B) issu du commerce (dénommée PureColorHP Translucent de la société INVICON, résine thermo-durcissable avec charge minérale composée de silicate de baryum et de silice). Les nano-pigments A sont obtenus à partir de nanoparticules d'or de 20 nm de diamètre enrobées dans une matrice de silice de 50 nm d'épaisseur. Ces nano-pigments sont dispersés à hauteur de 1% poids dans le composite à l'aide d'un mélangeur à hélice. Le mélange est homogénéisé et broyé à l'aide d'un mélangeur tri-cylindre. Un substrat en alumine blanc est préparé par des opérations successives de sablage, lavage, nettoyage et activation par plasma et finalement silanisation. Le mélange coloré A+B est déposé à la spatule dans une cavité du substrat d'une profondeur de 0,1 mm. Le composant ainsi obtenu est placé dans une enceinte thermostatée à 120°C et sous 4 bars de pression durant 60 minutes afin de permettre la polymérisation du mélange coloré A+B. Après refroidissement à l'air et polissage, le matériau en couches obtenu présente une couleur rose clair au niveau de la cavité.

### Exemple 2

Cet exemple consiste à mélanger de manière homogène des nano-pigments (A), obtenus selon les enseignements de la demande internationale n° WO2008/014623, avec la matrice hybride organo-minérale translucide (B) issue du commerce décrite à l'exemple 1. Les nano-pigments A sont obtenus à partir de nanoparticules d'or de 20 nm de diamètre enrobées dans une matrice de silice de 50 nm d'épaisseur. Ces nano-pigments sont dispersés à hauteur de 1% poids dans le composite à l'aide d'un mélangeur à hélice. Le mélange est homogénéisé et broyé à l'aide d'un mélangeur tri-cylindre. Un substrat en alliage de platine 950/1000 gris est préparé par des opérations successives de sablage, lavage, nettoyage et activation par plasma et finalement silanisation. Le mélange coloré A+B est déposé à la spatule dans une cavité du substrat d'une profondeur de 0,1 mm. Le composant ainsi obtenu est placé dans une enceinte thermostatée à 120°C et sous 4 bars de pression durant 60 minutes afin de permettre la polymérisation du mélange coloré A+B. Après refroidissement à l'air et polissage, le matériau en couches obtenu présente une couleur rose clair au niveau de la cavité.

### Exemple 3

Cet exemple consiste à mélanger de manière homogène des nano-pigments (A), obtenus selon les enseignements de la demande internationale n° WO2008/014623, avec la matrice hybride organo-minérale translucide (B) issue du commerce décrite à l'exemple 1. Les nano-pigments A sont obtenus à partir de nanoparticules d'or de 20 nm de diamètre enrobées dans une matrice de silice de 50 nm d'épaisseur. Ces nano-pigments sont dispersés à hauteur de 6% poids dans le composite à l'aide d'un mélangeur à hélice. Le mélange est homogénéisé et broyé à l'aide d'un mélangeur tri-cylindre. Un substrat en alumine blanc est préparé par des opérations successives de sablage, lavage, nettoyage et activation par plasma et finalement silanisation. Le mélange coloré A+B est déposé à la spatule dans une cavité du substrat d'une profondeur de 0.1mm. Le composant ainsi obtenu est placé dans une enceinte thermostatée à 120°C et sous 4 bars de pression durant 60 minutes afin de permettre la polymérisation du mélange coloré A+B. Après refroidissement et polissage, le matériau en couches obtenu présente une couleur rouge clair au niveau de la cavité.

### Exemple 4

Cet exemple consiste à mélanger de manière homogène des nano-pigments (A), obtenus selon les enseignements de la demande internationale n° WO2008/014623, avec une matrice hybride organo-minéral translucide (B) issue du commerce décrite à l'exemple 1. Les nano-pigments A sont obtenus à partir de nanoparticules d'or de 20 nm de diamètre enrobées dans une matrice de silice de 50 nm d'épaisseur. Ces nano-pigments sont dispersés à hauteur de 6% poids dans le composite à l'aide d'un mélangeur à hélice. Le mélange est homogénéisé et broyé à l'aide d'un mélangeur tri-cylindre. Un substrat en alumine blanc est préparé par des opérations successives de sablage, lavage, nettoyage et activation par plasma et finalement silanisation. Le mélange coloré A+B est déposé à la spatule dans une cavité du substrat d'une profondeur de 1 mm. Le composant ainsi obtenu est placé dans une enceinte thermostatée à 120°C et sous 4 bars de pression durant 60 minutes afin de permettre la polymérisation du mélange coloré A+B. Après refroidissement et polissage, le matériau en couches obtenu présente une couleur rouge vive et intense au niveau de la cavité.

### Exemple 5

Cet exemple consiste à mélanger de manière homogène des nano-pigments (A), obtenus selon les enseignements de la demande internationale n°WO2008/014623, avec une matrice hybride organo-minérale opaque ivoire (B) issue du commerce (Pure Color HP white P7541C de la forme INVICON, résine thermo-durcissable avec charge minérale composée de silicate de baryum et de silice). Les nano-pigments A sont obtenus à partir de nanoparticules d'or de 20 nm de diamètre enrobées dans une matrice de silice de 50 nm d'épaisseur. Ces nano-pigments sont dispersés à hauteur de 6% poids dans le composite à l'aide d'un mélangeur à hélice. Le mélange est homogénéisé et broyé à l'aide d'un mélangeur tri-cylindre. Un substrat en alumine blanc est préparé par des opérations successives de sablage, lavage, nettoyage et activation par plasma et finalement silanisation. Le mélange coloré A+B est déposé à la spatule dans une cavité du substrat d'une profondeur de 1mm. Le composant ainsi obtenu est placé dans une enceinte thermostatée à 120°C et sous 4 bars de pression durant 60 minutes afin de permettre la polymérisation du mélange coloré A+B. Après refroidissement à l'air et polissage, le matériau en couches obtenu présente une couleur rose au niveau de la cavité.

### Exemple 6

Cet exemple consiste à mélanger de manière homogène des nano-pigments (A), obtenus selon les enseignements de la demande internationale n°WO2008/014623, avec la matrice hybride organo-minérale opaque ivoire (B) issue du commerce décrite à l'exemple 5. Les nano-pigments A sont obtenus à partir de nanoparticules d'or de 20 nm de diamètre enrobées dans une matrice de silice de 50 nm d'épaisseur. Ces nano-pigments sont dispersés à hauteur de 6% poids dans le composite à l'aide d'un mélangeur à hélice. Le mélange est homogénéisé et broyé à l'aide d'un mélangeur tri-cylindre. Le substrat en zircone yttriée foncée est préparé par des opérations successives de sablage, lavage, nettoyage et activation par plasma et finalement silanisation. Le mélange coloré A+B est déposé à la spatule dans une cavité du substrat d'une profondeur de 1 mm. Le composant ainsi obtenu est placé dans une enceinte thermostatée à 120°C et sous 4 bars de pression durant 60 minutes afin de permettre la polymérisation du mélange coloré A+B. Après refroidissement et polissage, le matériau en couches obtenu présente une couleur rose au niveau de la cavité.

Ces exemples démontrent les principes de coloration de la matrice hybride B par les nano-pigments A. Plus la couche est épaisse, plus la couleur est vive. Plus la concentration de nano-pigments est importante, plus la couleur est intense. Si la matrice hybride B est opaque, la couleur de cette matrice B influence la couleur finale de la zone colorée. La couleur du substrat influence celle de la zone colorée uniquement lors d'usage d'une couche de matrice B translucide de faible épaisseur.

## Revendications

1. Matériau composite coloré, contenant des nanoparticules métalliques ayant perdu leur tendance naturelle à s'agréger les unes aux autres, **caractérisé en ce qu'**il est essentiellement constitué d'une matrice organo-minérale dans laquelle sont dispersées des nanoparticules métalliques.

2. Matériau composite selon la revendication 1, **caractérisé en ce que** les nanoparticules ont perdu leur aptitude à s'agréger les unes aux autres par répulsion électrostatique, par fonctionnalisation à l'aide de porteurs de charge placés sur leur surface, par exemple de la gomme arabique.

3. Matériau composite selon la revendication 1, **caractérisé en ce que** les nanoparticules ont perdu leur aptitude à s'agréger les unes aux autres par fonctionnalisation à l'aide d'entités à fort encombrement stérique tel que du polystyrène.

4. Matériau composite selon la revendication 1, **caractérisé en ce que** les nanoparticules ont perdu leur aptitude à s'agréger les unes aux autres par fonctionnalisation à l'aide d'entités hydrophiles placées à leur surface telles que du polystyrène modifié par des groupes carboxyles, ou des tensioactifs comme le dodécylsulfate de sodium.

5. Matériau composite selon la revendication 1, **caractérisé en que** les nanoparticules métalliques ont perdu leur aptitude à s'agréger les unes aux autres par enrobage avec une substance inerte, telle que la silice.

6. Matériau composite selon l'une des revendications précédentes, **caractérisé en ce que** les nanoparticules métalliques sont des nanoparticules de métal noble tel que l'or, l'argent ou le platine ou encore leurs alliages, et/ou d'un autre métal choisi dans le groupe comprenant le fer, le chrome, le cuivre, le cobalt ou le manganèse, ou leurs alliages.

7. Matériau composite selon l'une des revendications précédentes, comprenant au plus 20% en poids de nanoparticules métalliques par rapport à son poids total.

8. Matériau composite selon la revendication 7, comprenant au plus 15% en poids de nanoparticules métalliques par rapport à son poids total.

9. Matériau en couches comprenant une couche de matériau composite coloré selon l'une des revendications 1 à 8 déposée sur un substrat.

10. Procédé de fabrication d'un matériau composite selon l'une des revendications 1 à 8, **caractérisé en ce qu'**on prépare une matrice organo-minérale à base de monomères ou d'oligomères dans laquelle on a mis en suspension ou dispersion des nanoparticules métalliques, puis on polymérise le mélange.

11. Procédé selon la revendication 10, dans lequel on effectue une polymérisation thermique sous pression.

12. Procédé selon la revendication 10 ou 11, **caractérisé en ce que** les oligomères sont choisis dans le groupe comprenant le bisphénol A-glycidyl méthacrylate (BISMA), le diméthacrylate d'uréthane (UDMA), comprenant une charge minérale de silice.

13. Utilisation d'un matériau selon l'une des revendications 1 à 9 en bijouterie, joaillerie ou horlogerie.
